(19) Europäisches Patentamt
European Patent Office
Office européen des brevets

(11) **EP 3 341 802 B1**

(12) **EUROPÄISCHE PATENTSCHRIFT**

(45) Veröffentlichungstag und Bekanntmachung des Hinweises auf die Patenterteilung:
**19.06.2024  Patentblatt 2024/25**

(21) Anmeldenummer: **16791524.8**

(22) Anmeldetag: **03.11.2016**

(51) Internationale Patentklassifikation (IPC):
**G05B 19/18** (2006.01)     **B23F 1/06** (2006.01)
**B23F 5/20** (2006.01)

(52) Gemeinsame Patentklassifikation (CPC):
**G05B 19/186;** Y02P 90/02

(86) Internationale Anmeldenummer:
**PCT/EP2016/001829**

(87) Internationale Veröffentlichungsnummer:
**WO 2017/076503 (11.05.2017 Gazette 2017/19)**

(54) **VERFAHREN ZUM ERZEUGEN ODER BEARBEITEN VON VERZAHNUNGEN AN WERKSTÜCKEN**

METHOD FOR CREATING OR MACHINING TOOTHINGS ON WORKPIECES

PROCÉDÉ DE RÉALISATION OU D'USINAGE DE DENTURES SUR DES PIECES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2015   DE 102015014313**

(43) Veröffentlichungstag der Anmeldung:
**04.07.2018   Patentblatt 2018/27**

(73) Patentinhaber: **Gleason-Pfauter Maschinenfabrik GmbH**
**71636 Ludwigsburg (DE)**

(72) Erfinder:
• **KIENZLE, Florian**
**70771 Leinfelden (DE)**
• **MAYER, Sven**
**70193 Stuttgart (DE)**

(74) Vertreter: **Leinweber & Zimmermann**
**Patentanwalts-PartG mbB**
**European Patent Attorneys**
**Viktualienmarkt 8**
**80331 München (DE)**

(56) Entgegenhaltungen:
**EP-A1- 0 135 064      EP-A2- 2 853 331**
**EP-B1- 0 135 064      WO-A1-2015/146661**
**US-A- 5 136 522**

**Beschreibung**

Die Erfindung betrifft ein Verfahren zum Erzeugen oder Bearbeiten von Verzahnungen an Werkstücken im wälzenden Bearbeitungseingriff, insbesondere durch Wälzstoßen, bei dem eine NC-Steuerung der Drehspindelantriebe von Werkstück und Werkzeug eine Regelung der Drehwinkelposition der jeweiligen Spindel auf in Abhängigkeit der zu der dem Verfahren zugrundeliegenden Prozessauslegung zugehörigen Prozessparameter bestimmte Sollwerte umfasst.

Derartige Verfahren sind dem Fachmann auf dem Gebiet der Verzahnungstechnologie gut bekannt und umfassen beispielsweise das Wälzstoßen und Wälzfräsen von Verzahnungen. Den Verfahren liegt eine Prozessauslegung zugrunde, deren Bestimmung mit den Parametern des herzustellenden Werkstücks beginnt. Diese werden üblicherweise von den Anwendern vorgegeben und betreffen den Werkstückdurchmesser und seine Zähnezahl, damit den Modul der herzustellenden Verzahnung sowie den Schrägungswinkel und ggf. Zahnflankenmodifikationen wie Balligkeiten usw. Zu diesen Werkstückparametern werden dann sowohl die Werkzeugparameter beispielsweise eines Stoßrads für das Wälzstoßverfahren oder eines Wälzfräsers für das Wälzfräsverfahren als auch die Prozessauslegung bestimmt. Dabei wird für das Werkzeug auch die Zähnezahl und der Durchmesser betrachtet und als Prozess- bzw. Technologieparameter die Anzahl der Umläufe (Schruppumläufe, Schlichtumläufe) sowie z.B. beim Wälzstoßen auch die Anzahl der Hübe pro Teilung. Die Prozessauslegung wird testweise auf ihre Funktionstüchtigkeit hin überprüft und ggf. angepasst, wenn die Testläufe zeigen, dass die am Werkstück gewünschte Genauigkeit nicht eingehalten wird. Im Falle des Wälzstoßens wird dann beispielsweise die Anzahl der Stoßhübe pro Teilung erhöht und die Prozessauslegung entsprechend angepasst. Mit der so etablierten Prozessauslegung liegen dann auch die Prozessparameter fest, in Abhängigkeit derer die Sollwerte für die NC-gesteuerten Maschinenachsen vorgegeben werden, also für die Drehspindelantriebe der rotatorischen Achsen der Werkzeug- und Werkstückdrehung, wie auch der linearen und rotatorischen Positionierachsen und beim Wälzstoßen die des Stoßschlittens. Mit der in den NC-Steuerungen enthaltenen Regelung auf diese Sollwerte werden dann die Verzahnungen an den Werkstücken erzeugt.

EP 2 853 331 A2 offenbart ein Wälzschälverfahren, bei dem überprüft wird, ob eine Schwingungsamplitude eines von einem Vibrationssensor festgestellten Schwingungssignal eine vorgegebene Schwelle überschreitet, um im bejahenden Fall einen von dem erfassten Amplitudenwert abhängigen Korrekturbetrag für eine Relativpositionierung oder Phasenkorrektur zu berechnen und eine entsprechende Korrektur der Maschinenachsbewegungen auszuführen.

Der Erfindung liegt die Aufgabe zugrunde, bei Verfahren der eingangs genannten Art möglichst hohe Bearbeitungsgenauigkeiten bei möglichst kurzen Bearbeitungszeiten zu erreichen.

Diese Aufgabe wird in verfahrenstechnischer Hinsicht durch eine Weiterbildung des Verfahrens der eingangs genannten Art gelöst, das die Merkmale von Anspruch 1 aufweist. Es ist im Wesentlichen dadurch gekennzeichnet, dass man aus Informationen über eine durch die bei der Bearbeitung auftretenden Prozesskräfte bedingte, zu Profilformabweichungen am Werkstück führende Abdrängung der Lage der Zahnflanken von Werkzeug und Werkstück aus ihrer gemäß der Prozessauslegung vorgesehenen Lage enthaltenden Daten eine die Abdrängung berücksichtigende Korrektur für die Drehwinkelposition von Werkstückspindel und/oder Werkzeugspindel ermittelt und damit die Sollwerte der Regelung modifiziert.

Im Rahmen der Erfindung ist erkannt worden, dass aufgrund der auftretenden Prozesskräfte eine Abdrängung der Lage der Zahnflanken des Werkstücks/Werkzeugs aus ihrer gemäß der Prozessauslegung vorgesehenen Lage dafür verantwortlich ist, dass trotz einer auf die vorgegebenen Sollwerte durchgeführten Regelung Profilformabweichungen auftreten, denen man auch ohne Änderung der zugrundeliegenden Prozessauslegung entgegenwirken kann, indem die über die der Prozessauslegung zugehörigen Prozessparameter bestimmten Sollwerte durch eine Korrektur modifiziert werden, die der Abdrängung entgegengesetzt wirkt. Demnach werden der NC-Steuerung modifizierte Sollwerte aufgegeben, die bei der zugrundeliegenden Prozessauslegung eigentlich zu Profilformabweichungen führen würden, die aber den aufgrund der Prozesskräfte auftretenden Abweichungen entgegengerichtet sind, so dass man insgesamt zu Werkstücken mit geringeren Profilformabweichungen gegenüber einer vorgegebenen Sollprofilkontur gelangt. Auf diese Weise gelingt es, auf Änderungen der Technologieparameter und der Prozessauslegung zu verzichten oder diese nur in geringerem Umfang durchzuführen und dadurch auch Bearbeitungszeit einzusparen.

In einer bevorzugten Verfahrensgestaltung wird die Sollwertkorrektur periodisch aufgegeben. In diesem Zusammenhang ist vorgesehen, dass eine auf das Werkstück bezogene Periodenlänge der Sollwertkorrektur 360°/Zähnezahl des Werkstücks beträgt.

Desweiteren kann zudem vorgesehen werden, die Sollwertkorrektur insgesamt oder z.B. in erster Näherung harmonisch zu gestalten und ggf. dieser harmonischen Korrekturfunktion eine nicht harmonische Korrektur geringerer Größenordnung zu überlagern.

In einer bevorzugten Verfahrensgestaltung umfasst eine Phase der Korrektur neben einem Winkelabstand einer Zahnlückenmitte des Werkstücks zu einer vorgegebenen raumfesten Referenzwinkellage einen den Fehler am Profil des Werkstücks berücksichtigenden Phasen-Offset. Durch geeignete Abstimmung der Korrektur und der raumfesten Referenzwinkellage kann der diesbezügliche Winkelabstand im Wege einer "Eichung" des Korrekturverfahrens auch auf Null gesetzt werden. Der Phasen-Offset lässt sich z.B. dadurch bestimmen, dass man eine harmonische Funktion (bereits bestimmter Frequenz, drehwinkelbezogen) bis zur besten Anpassung durch einen aufgezeichneten (drehwinkelbezogenen) Verlauf des von einem Spindelmotor aufgebrachten Drehmoments legt.

In einer besonders bevorzugten Ausgestaltung des Verfahrens ist vorgesehen, dass eine Amplitude der Sollwertkorrektur abhängig von einem oder mehreren der Parameter Werkzeug- und Werkzeugdurchmesser und -zähnezahl, Nachgiebigkeit des Werkzeugs und Werkstücks, Modul der Verzahnung, Schrägungswinkel der Verzahnung bestimmt wird. Die Nachgiebigkeit des Werkzeugs bezieht sich auf die am Tool Centerpoint gemessene, bei der Nachgiebigkeit des Werkstücks kann diese inklusive aller Komponenten im Kraftfluss (absolut gemessen) berücksichtigt werden.

In einer bevorzugten Verfahrensvariante wird eine Bearbeitung eines ersten Werkstücks vor Modifizierung der Sollwerte fertiggestellt und die Sollwertkorrektur für nachfolgende Werkstücke gleicher Art bei deren unter der gleichen Prozessauslegung vorgenommenen Bearbeitung vorgenommen. Diese Verfahrensvariante eignet sich besonders gut in denjenigen Fällen, in denen eine Serie einer großen Anzahl gleichartiger Werkstücke erzeugt werden soll.

In dieser Variante wird es bevorzugt, das fertiggestellte Werkstück zu vermessen und auch daraus Daten für die Sollwertkorrektur zu entnehmen. Diese Art der Sollwertkorrektur ermöglicht eine nochmals höhere Genauigkeit beim Erreichen von Profilformen möglichst nahe der gewollten Sollprofilform.

In einer besonders bevorzugten Verfahrensgestaltung ist bei dieser Variante eine Größenordnung der Amplitude der Sollwertkorrektur durch den über die Zähne gemessenen maximalen Aufmaßunterschied in der Profilformabweichung des vermessenen Werkstücks bestimmt. Dies führt bereits zu erkennbar niedrigeren Profilformabweichungen. Zudem kann vorgesehen werden, einer oder mehrere der oben genannten Parameter in eine Feinabstimmung der Amplitude einfließen zu lassen, um die Minimierung der Profilformabweichung weiter zu optimieren.

In einer alternativ oder zusätzlich herangezogenen Verfahrensgestaltung wird das Verfahren in wenigstens zwei an einem Werkstück vorgenommenen Durchgängen insbesondere unterschiedlicher Zustelltiefe ausgeführt, wobei der frühere Durchgang vor der Sollwertkorrektur fertiggestellt wird und die Sollwertverschiebung für wenigstens einen der, insbesondere den letzten Durchgang umfassenden, nachfolgenden Durchgänge der Werkstückbearbeitung vorgenommen wird. In dieser Variante ist eine Abspannung des Werkstücks zu dessen zwischenzeitlicher Vermessung nicht erforderlich. Vielmehr erfolgt die Sollwertkorrektur anhand von Daten, die während des früheren Durchgangs ermittelt werden. Diese Verfahrensvariante eignet sich besonders für größere Werkstücke z.B. in der Einzelfertigung.

In diesem Zusammenhang ist bevorzugt vorgesehen, dass man während des früheren Durchgangs den zeitlichen Verlauf der von der noch unmodifizierten Regelung vorgenommenen Nachführung der Ist-Werte auf die Soll-Werte feststellt und diese Nachführungswerte als Daten für die Bestimmung der Sollwertkorrektur heranzieht.

In einer besonders bevorzugten Verfahrensgestaltung ist noch vorgesehen, dass die Ermittlung der Sollwertkorrektur anhand der aufgezeichneten Abweichungen der Drehwinkelposition von Werkstück und/oder Werkzeugspindel und/oder anhand festgestellter, von dem Spindelmotor von Werkstück und/oder Werkzeugspindel aufgrund deren Drehmoment-Regelung tatsächlich aufgebrachter Drehmomente erfolgt, insbesondere unter Berücksichtigung der Nachgiebigkeit gemessen am Werkstück und Werkzeug.

Zweckmäßig geht die Modifizierung der Sollwerte über in Form von tabellenartig aufgestellten Werten der Korrektur in die NC-Steuerung ein. Auf diese Weise können in geeigneter Weise bereits vorhandene Bediener-Schnittstellen von NC-Steuerungssoftware von Verzahnungsmaschinen genutzt werden.

Je nachdem, ob Messwerte eines Vorgängerwerkstücks zur Verfügung stehen oder nicht, lässt sich der Verfahrensablauf auch gestalten. So ist in einer Variante vorgesehen, gänzlich auf den Schlichtdurchgang zu verzichten und z.B. beim auswälzenden Schruppen zu modifizieren. In einer anderen Variante könnte man mit einem noch nicht modifizierten ersten Schlichtdurchgang (zur Bestimmung z.B. von Drehmomenten beim Schlichten) und einem modifizierten zweiten Schlichtdurchgang arbeiten.

Das erfindungsgemäße Verfahren wird auch in Form eines Computer-Programms mit Programmanweisungen unter Schutz gestellt, die, wenn auf einer Verzahnungsmaschine ausgeführt, die Maschine zur Ausführung eines Verfahrens nach einem der vorhergehenden Verfahrensaspekte steuert.

In vorrichtungstechnischer Hinsicht wird eine Verzahnungsmaschine unter Schutz gestellt, mit einer von einem von einem Spindelantriebsmotor drehend angetriebenen Werkzeugspindel zur Aufnahme eines Bearbeitungswerkzeugs und einem Spindelantriebmotor zum Antreiben einer Werkstückspindel, einer NC-Steuerung der Drehspindelantriebe, die eine Regelung der Drehwinkelposition der Spindel auf in Abhängigkeit der in die Maschine eingegebenen Prozessparameter bestimmte Sollwerte umfasst, gekennzeichnet durch eine Steuerung, die die Maschine zur Ausführung eines Verfahrens nach einem der oben genannten Verfahrensaspekte steuert bzw. mit einem Computer-Programm wie oben beschrieben ausgestattet ist.

Besonders bevorzugt wird das Verfahren beim Wälzstoßen eingesetzt und eine entsprechend ausgestattete Wälzstoßmaschine vorgesehen, da aufgrund der zusätzlichen Hubbewegung des Werkzeugs und den damit einhergehenden Prozesskräften die Vorteile des erfindungsgemäßen Verfahrens besonders zur Geltung kommen, es sind jedoch auch entsprechende Anwendungen für das Wälzfräsen oder Wälzschälen denkbar.

Weitere Merkmale, Einzelheiten und Vorteile der Erfindung ergeben sich aus der nachfolgenden Beschreibung mit Bezug auf die beigefügten Figuren, von denen

Fig. 1 eine Darstellung des Profilformfehlers, gemessen einmal an einem Werkstück nach Bearbeitung noch ohne Sollwert-Modifizierung (Fig. 1a) und einmal mit Modifizierung (Fig. 1b), und

Fig. 2 eine graphische Darstellung des Verlaufs von Prozessgrößen mit angedeuteten Korrekturmechanismen zeigt.

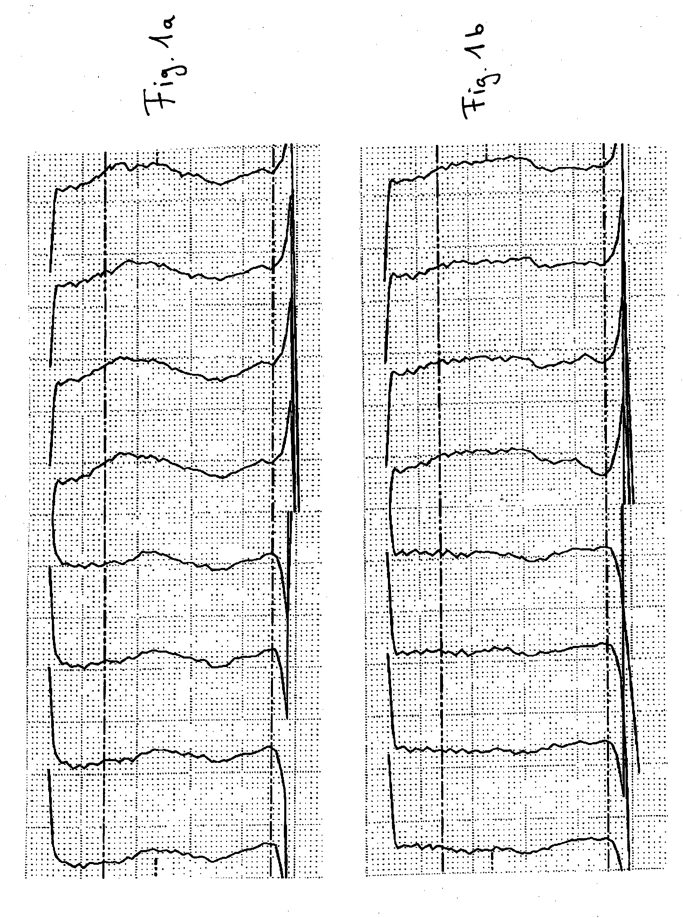

Fig. 1a zeigt eine Vermessung der Flanken eines Werkstücks, welches unter vorgegebenen Parametern im Wälzstoßverfahren erzeugt wurde, in der für den Fachmann üblichen Weise. Die genaueren Werkstückdaten sind für das folgende nicht relevant; vielmehr ist für die nachfolgende Erläuterung der Erfindung von Bedeutung, dass bei der Auswertung die an den jeweiligen Zahnflanken bestehenden Profilformfehler bestimmt wurden, die zahnabhängig in diesem Ausführungsbeispiel im Intervall von 6,3 bis 8,9 $\mu$m lagen. Bei diesem Werkstück handelt es sich beispielsweise um das erste Werkstück einer größeren Werkstückserie identischer Werkstücke, die nachfolgend bearbeitet werden.

Diese nachfolgenden Werkstücke werden allerdings nicht mehr mit dem identisch angesteuerten Verfahren wälzgestoßen, sondern in modifizierter Art und Weise, wozu in diesem darstellenden Ausführungsbeispiel wie folgt vorgegangen wird.

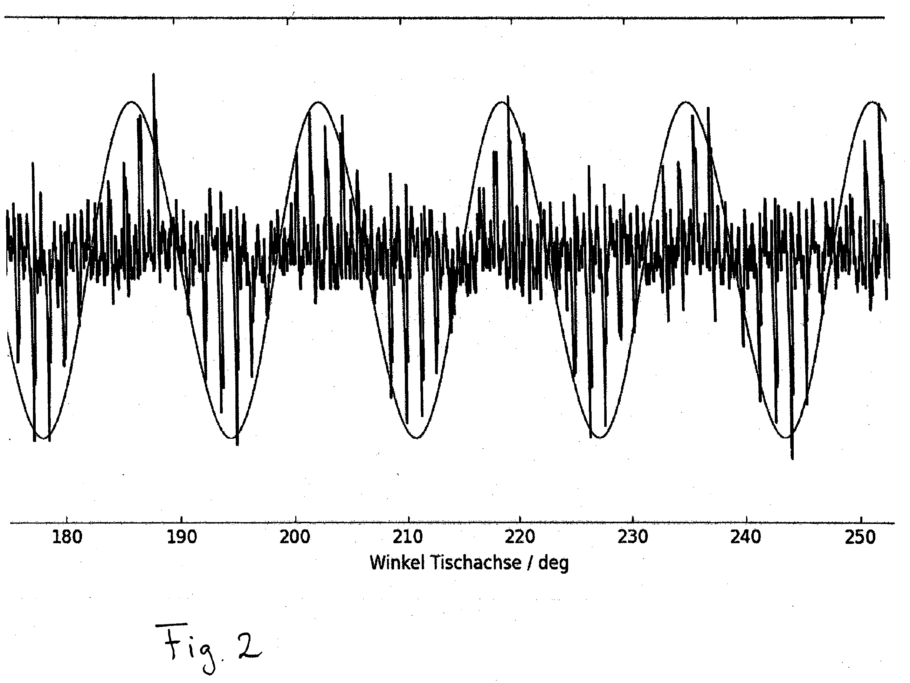

Während des Schlichtschnitts des ersten Werkstücks wurden die vom Spindelantriebsmotor der Werkstückspindel aufgebrachten Drehmomente aufgezeichnet, wobei eine drehwinkelbezogene Darstellung gewählt wird. Das Ergebnis dieser Aufzeichnung ist der in Fig. 2 eingezeichnete stark fluktuierende Verlauf. Nun wird der Ansatz einer harmonischen Korrektur der Form

$$\mathrm{corr}\,(\varphi) = \mathcal{A} \sin\,(\omega_\varphi \cdot \varphi + \psi)$$

gewählt und darin die drehwinkelbezogene Frequenz $\omega_\varphi$ auf $2\pi$/Zähnezahl des Werkstücks festgelegt (oder 360°/Zähnezahl des Werkstücks). Diese Funktion wird nun durch Abstimmung der Phase $\psi$ zunächst so lange verschoben, bis eine beste Abstimmung gegenüber den Grundschwankungen der in Fig. 2 dargestellten Drehmomente erreicht ist. Dies ist in der in Fig. 2 durch die durchgezogene Sinuskurve dargestellten Situation gegeben.

Diese in Fig. 2 durchgezogene Sinuskurve wird nun als (bis auf die Amplitude bestimmte) Korrekturfunktion vorzeichenrichtig (gegebenenfalls ist die Phase $\psi$ je nach Eingabeart in die NC-Steuerung nochmals um $\pi$ bzw. 180° zu verschieben) herangezogen, um die der Profilabweichung entgegengesetzte Wirkung zu erzeugen. Zudem wird die bislang noch unbestimmte Amplitude $\mathcal{A}$ festgelegt auf die Hälfte der gemittelten Profilformabweichungen f$_{f\alpha}$, was bei dem Ausführungsbeispiel des vermessenen Zahnrads von Fig. 1a eine Amplitude von 3,5 $\mu$m ergibt.

Aus der Korrekturkurve lässt sich dann eine Korrekturtabelle erstellen, die wiederum drehwinkelbezogen ist und die der Maschinensteuerung für die Bearbeitung der nachfolgenden Werkstücke als Modifizierung ihrer sonst herangezogenen Sollwerte für die Drehwinkelposition aufgegeben wird. Dies hat zur Folge, dass die Steuerung nunmehr Sollwerte ausgibt, die rein kinematisch gesehen zu einer Profilformabweichung an den Werkstückflanken führen würde. Aufgrund der auftretenden Bearbeitungskräfte und der dadurch bedingten Abdrängung der Flankenlagen liegt dann aber das tatsächlich erzeugte Profil wieder näher an dem gewünschten Sollprofil.

Das Ergebnis dieser Modifikation ist in Fig. 1b zu erkennen, in der ein nächstes Werkstück vermessen dargestellt ist, welches im Schlichtschritt der Wälzstoßbearbeitung unter Modifizierung der Sollwerte erzeugt wurde. Dabei wurde in diesem Ausführungsbeispiel eine um fast 50% reduzierte mittlere Profilformabweichung erreicht, also eine Verbesserung, die bereits mit bloßem Auge aus dem Vergleich der Messdiagramme von Fig. 1a und 1b erkennbar ist.

Liegen Messwerte der Profilformabweichung eines Vorgängerwerkstücks für die Bearbeitung eines Werkstückes noch nicht vor, können ebenfalls geringere Profilformabweichungen für das gerade bearbeitete Werkstück erreicht werden. Dazu wird beispielsweise nach dem Schruppen in einem ersten Schlichtschritt der Drehmomentverlauf an dem Werkstückspindelantrieb aufgezeichnet und wiederum bei einer drehwinkelbezogenen Frequenz von 360°/Zähnezahl des Werkstücks eine Korrekturfunktion für einen zweiten Schlichtdurchgang bestimmt. Die Phase der Korrekturfunktion kann dabei auf die gleiche Weise bestimmt werden wie oben dargestellt. Die Bestimmung der Amplitude kann z.B. dann über Betrachtungen des Profilfehlers e erfolgen, d. h. der Verlagerung des Kontaktpunkts zwischen Werkzeug und Werkstück während des Schnittes, die sich aus einer Verlagerung auf Seite des Werkstücks und auf Seite des Werkzeugs zusammensetzt:

$$e = \Delta u_{\mathrm{Wz}} - \Delta u_{\mathrm{Ws}},$$

worin $\Delta u$ jeweils die Verlagerung in Tangentialrichtung bezeichnet. Diese setzt sich jeweils aus einer Überlagerung von Torsion und Biegung von Werkstück bzw. Werkzeug zusammen,

$$\Delta u_{Wz} = \frac{T_{Wz}\, r_{Wz}}{c_{T,Wz}} + \frac{F_{contact}}{c_{B,Wz}}$$

$$\Delta u_{Ws} = -\frac{T_{Ws}\, r_{Ws}}{c_{T,Ws}} - \frac{F_{contact}}{c_{B,Ws}}.$$

worin T mit jeweiligem Index für Werkzeug und Werkstück das Drehmoment angibt, r mit jeweiligem Index den Radius, $c_T$ jeweils mit Index für Werkzeug und Werkstück die werkzeugseitige bzw. werkstückseitige Torsionssteifigkeit angibt sowie $c_B$ mit jeweiligem Index die jeweilige Biegesteifigkeit, und für die Kontaktkraft $F_{contact}$ gilt:

$$F_{contact} = \frac{T_{Wz}}{r_{Wz}} = \frac{T_{Ws}}{r_{Ws}}.$$

Aufgrund dieses Zusammenhangs genügt zur Bestimmung des Fehlers e die Messung des Drehmoments an der Werkstückspindel, wie oben in Fig. 2 dargestellt, und durch Einsetzen der obigen Gleichungen ineinander ergibt sich ein linearer Zusammenhang

$$e = k \cdot T_{Ws}.$$

Dann lassen sich die aufgezeichneten Drehmomente (Darstellung wie z.B. bei Fig. 2) mit dem Faktor $k/r_{Ws}$ skalieren und die Amplitude der harmonischen Korrekturfunktion auch in Amplitudenrichtung an diese skalierten Werte anpassen (wenn die Modifizierung z.B. allein über die Sollwertkorrektur der Werkstückspindel erfolgen soll).

Alternativ könnte man die Modifizierung über die Drehwinkelpositionsregelung der Werkzeugspindel einrichten oder anteilig auf Werkstückspindel und Werkzeugspindel aufteilen.

Aufgrund der Genauigkeitsverbesserungen, die durch die erfindungsgemäße Sollwertmodifizierung erreichbar werden, kann als weitere Verfahrensgestaltung auf den Schlichtschritt gänzlich verzichtet werden und die Modifizierung bei einem auswälzenden Schruppen vorgenommen werden. In diesem Fall geht man bei der Bestimmung von drehwinkelbezogener Frequenz und Phase der Korrekturfunktion vor wie oben bereits beschrieben, mit dem Unterschied, dass die Drehmomentaufzeichnung des vorherigen Schruppens herangezogen werden. Zudem wird man bevorzugt nicht mehr mit einer zeitlich bzw. drehwinkelpositionsbezogenen konstanten Amplitude der Korrekturfunktion arbeiten, sondern aufgrund der bedingt durch die radiale Zustellung spiralförmigen Eintauchbewegung eine drehwinkelabhängige Amplitude heranziehen, also insgesamt mit einer "pseudo-periodischen" Korrekturfunktion arbeiten. Beispielsweise kann man mit einer linear abnehmenden Amplitude arbeiten, die man dadurch bestimmt, dass man anstelle der oben erwähnten gemittelten Profilformabweichung eine lineare Rampe zwischen dem Zahn mit der geringsten und dem Zahn mit der größten Profilformabweichung bildet.

Die Erfindung ist nicht auf die in der vorstehenden Beschreibung der beigefügten Figuren dargestellten Einzelheiten eingeschränkt. Vielmehr können die Merkmale der obigen Beschreibung wie auch die der nachstehenden Ansprüche einzeln und in Kombination für die Verwirklichung der Erfindung in ihren verschiedenen Ausgestaltungen wesentlich sein.

**Patentansprüche**

1. Verfahren zum Erzeugen oder Bearbeiten von Verzahnungen an Werkstücken im wälzenden Bearbeitungseingriff, insbesondere durch Wälzstoßen, bei dem eine NC-Steuerung der Drehspindelantriebe von Werkstück und Werkzeug eine Regelung der Drehwinkelposition der jeweiligen Spindel auf in Abhängigkeit der zu der dem Verfahren zugrundeliegenden Prozessauslegung zugehörigen Prozessparameter bestimmte Sollwerte umfasst, **dadurch gekennzeichnet, dass** man aus Informationen über eine durch die bei der Bearbeitung auftretenden Prozesskräfte bedingte, zu Profilformabweichungen am Werkstück führende Abdrängung der Lage der Zahnflanken von Werkzeug und Werkstück aus ihrer gemäß der Prozessauslegung vorgesehenen Lage enthaltenden Daten eine die Abdrängung berücksichtigende Korrektur für die Drehwinkelposition von Werkstückspindel und/oder Werkzeugspindel ermittelt und damit die Sollwerte der Regelung modifiziert.

2. Verfahren nach Anspruch 1, bei dem die Sollwertkorrektur periodisch ist.

3. Verfahren nach Anspruch 2, bei der eine auf das Werkstück bezogene Periodenlänge der Sollwertkorrektur 360°/Zähnezahl des Werkstücks beträgt.

4. Verfahren nach Anspruch 2 oder 3, bei der eine Phase der Korrektur neben einem Winkelabstand einer Zahnlückenmitte des Werkstücks zu einer vorgegebenen raumfesten Referenzwinkellage einen Phasen-Offset umfasst.

5. Verfahren nach einem der Ansprüche 2 bis 4, bei dem eine Amplitude der Sollwertkorrektur abhängig von einem oder mehreren der Parameter Werkzeug- und Werkzeugdurchmesser und -zähnezahl, Nachgiebigkeit des Werkzeugs und Werkstücks, Modul der Verzahnung, Schrägungswinkel der Verzahnung bestimmt wird.

6. Verfahren nach einem der vorhergehenden Ansprüche, bei dem eine Bearbeitung eines ersten Werkstücks vor Modifizierung der Sollwerte fertiggestellt wird und die Sollwertkorrektur für nachfolgende Werkstücke gleicher Art bei deren unter der gleichen Prozessauslegung vorgenommenen Bearbeitung vorgenommen wird.

7. Verfahren nach Anspruch 6, bei dem das fertiggestellte Werkstück vermessen wird und daraus Daten für die Sollwertkorrektur entnommen werden.

8. Verfahren nach Anspruch 7, bei dem eine Größenordnung der Amplitude der Sollwertkorrektur durch den über die Zähne gemittelten maximalen Aufmaßunterschied in der Profilformabweichung des vermessenen Werkstücks bestimmt ist.

9. Verfahren nach einem der Ansprüche 1 bis 5, bei dem das Verfahren in wenigstens zwei an einem Werkstück vorgenommenen Durchgängen insbesondere unterschiedlicher Zustelltiefe ausgeführt wird, der frühere Durchgang vor der Sollwertkorrektur fertiggestellt wird und die Sollwertverschiebung für wenigstens einen der, insbesondere den letzten Durchgang umfassenden, nachfolgenden Durchgänge der Werkstückbearbeitung vorgenommen wird.

10. Verfahren nach Anspruch 9, bei dem während des früheren Durchgangs der zeitliche Verlauf der von der noch unmodifizierten Regelung vorgenommenen Nachführung der Ist-Werte von den Soll-Werten festgestellt und als die Daten für die Bestimmung der Sollwertkorrektur herangezogen wird.

11. Verfahren nach Anspruch 10, bei dem die Ermittlung der Sollwertkorrektur anhand der aufgezeichneten Abweichungen der Drehwinkelpositionen von Werkstück und/oder Werkzeugspindel und/oder anhand festgestellter, von dem Spindelmotor von Werkstück und/oder Werkzeugspindel aufgrund deren Drehmoment-Regelung tatsächlich aufgebrachter Drehmomente erfolgt, insbesondere unter Berücksichtigung der Nachgiebigkeit von Werkstück und Werkzeug.

12. Verfahren nach einem der vorhergehenden Ansprüche, bei dem die Modifizierung der Sollwerte über in Form von tabellenartig aufgestellten Werten der Korrektur in die NC-Steuerung eingeht.

13. Computerprogramm mit Programmanweisungen, die, wenn auf einer Verzahnungsmaschine ausgeführt, die Maschine zur Ausführung eines Verfahrens nach einem der vorhergehenden Ansprüche steuert.

14. Verzahnungsmaschine mit einer von einem Spindelantriebsmotor drehend angetriebenen Werkzeugspindel zur Aufnahme eines Bearbeitungswerkzeugs und einem Spindelantriebmotor zum Antreiben einer Werkstückspindel, einer NC-Steuerung der Drehspindelantriebe, die eine Regelung der Drehwinkelposition der Spindel auf in Abhängigkeit der in die Maschine eingegebenen Prozessparameter bestimmte Sollwerte umfasst, **gekennzeichnet durch** eine Steuerung, die die Maschine zur Ausführung eines Verfahrens nach einem der Ansprüche 1 bis 12 steuert und/oder eine Steuerung mit einem Computerprogramm nach Anspruch 13.

## Claims

1. A method for creating or machining toothings on workpieces in rolling machining engagement, in particular by gear shaping, in which an NC controller of the rotary spindle drives of the workpiece and tool comprises a regulation of the rotation angle position of each particular spindle to setpoints that are determined depending on the process parameters associated with the process design underlying the method,

   **characterised in that** data containing information relating to a deflection, caused by the process forces that arise during machining and resulting in profile shape deviations on the workpiece, of the position of the tooth flanks of the tool and workpiece out of their position intended in accordance with the process design are used to determine a correction, taking the deflection into account, of the rotation angle position of the workpiece spindle and/or tool spindle and thus to modify the setpoints of the regulation.

2. The method according to claim 1, wherein the setpoint correction is periodic.

3. The method according to claim 2, wherein a workpiece-related period length of the setpoint correction is 360°/number of teeth of the workpiece.

4. The method according to claim 2 or 3, wherein a phase of the correction comprises a phase offset in addition to an angular distance of a tooth-gap centre of the workpiece to a predefined spatially fixed reference angular position.

5. The method according to one of claims 2 to 4, wherein an amplitude of the setpoint correction is determined depending on one or a plurality of the following parameters: tool and workpiece diameter and number of teeth, resilience of the tool and workpiece, toothing module, helix angle of the toothing.

6. The method according to one of the preceding claims, wherein machining of a first workpiece is completed prior to modification of the setpoints and the setpoint correction is carried out for subsequent workpieces of the same type during their machining performed using the same process design.

7. The method according to claim 6, wherein the finished workpiece is measured and data are drawn therefrom for the setpoint correction.

8. The method according to claim 7, wherein an amplitude magnitude of the setpoint correction is determined by the maximum measurement difference averaged over the teeth in the profile shape deviation of the measured workpiece.

9. The method according to one of claims 1 to 5, wherein the method is carried out in at least two passes made on one workpiece, in particular passes of different downfeed depths, the earlier pass is finished prior to the setpoint correction, and the setpoint displacement is carried out for at least one of the subsequent passes of the workpiece machining, in particular comprising the last pass.

10. The method according to claim 9. wherein the time profile of the adjustment of the actual values to the setpoints, which is carried out by the still unmodified regulation, is established during said earlier pass and is used as the data for the determination of the setpoint correction.

11. The method according to claim 10, wherein the determination of the setpoint correction is carried out based on the recorded deviations of the rotary angle positions of the workpiece spindle and/or tool spindle and/or based on the detected torques actually applied by the spindle motor of the workpiece spindle and/or tool spindle based on their torque regulation, in particular taking into account the resilience of the workpiece and tool.

12. The method according to one of the preceding claims, wherein the modification of the setpoints is fed into the NC controller through correction values set up in the form of a table.

13. A computer program having program instructions that, when executed in a toothing machine, control the machine for the execution of a method according to one of the preceding claims.

14. A toothing machine comprising a tool spindle driven rotationally by a spindle drive motor for receiving a machining tool, a spindle drive motor to drive a workpiece spindle, and an NC controller of the rotary spindle drives that comprises a regulation of the rotary angle position of the spindles to setpoints that are determined depending on the process parameters input into the machine, **characterised by** a controller that controls the machine for carrying out a method according to one of claims 1 to 12 and/or a controller comprising a computer program according to claim 13.

**Revendications**

1. Procédé de production ou d'usinage de dentures sur des pièces en prise d'usinage par génération, en particulier par mortaisage, dans lequel une commande numérique (CN) des entraînements de broche rotative de la pièce et de l'outil comprend une régulation de la position angulaire de chaque broche à des valeurs de consigne qui sont déterminées en fonction des paramètres de processus associés à la conception du processus mis en oeuvre par le procédé, **caractérisé en ce que**, à partir de données contenant des informations relatives à la flèche concernant la position des flancs de dents de l'outil et de la pièce à usiner par rapport à leur position prévue selon la conception du processus, qui est provoquée par les forces de processus qui se produisent au cours de l'usinage et qui conduit à des écarts de forme de profil sur la pièce, on établit une correction de la position angulaire de la broche de la pièce et/ou de l'outil compte tenu de cette flèche, modifiant ainsi lesdites valeurs de consigne de la régulation.

2. Procédé selon la revendication 1, dans lequel la correction de la valeur de consigne est périodique.

3. Procédé selon la revendication 2. dans lequel la longueur de la période de la correction de la valeur de consigne liée à la pièce est de 360°/nombre de dents de la pièce.

4. Procédé selon la revendication 2 ou 3, dans lequel la phase de correction comprend un décalage de phase en sus d'un écart angulaire du centre d'un entredent de la pièce par rapport à une position angulaire de référence prédéterminée spatialement fixe.

5. Procédé selon l'une des revendications 2 à 4, dans lequel l'amplitude de la correction de la valeur de consigne est déterminée en fonction d'un ou plusieurs des paramètres suivants : diamètre et nombre de dents de l'outil et de la pièce, flexibilité de l'outil et de la pièce, module de la denture, angle d'hélice de la denture.

**6.** Procédé selon l'une des revendications précédentes, dans lequel on achève l'usinage d'une première pièce avant modification des valeurs de consigne et on entreprend la correction de la valeur de consigne pour les pièces subséquentes du même type lors de leur usinage entrepris selon la même conception de processus.

**7.** Procédé selon la revendication 6, dans lequel on mesure la pièce finie et on en extrait des données servant à la correction de la valeur de consigne.

**8.** Procédé selon la revendication 7, dans lequel l'ordre de grandeur de l'amplitude de la correction de la valeur de consigne est déterminé par la différence de mesure maximale moyennée sur les dents concernant l'écart de forme de profil de la pièce mesurée.

**9.** Procédé selon l'une des revendications 1 à 5, dans lequel le procédé est réalisé en au moins deux passes entreprises sur une pièce notamment avec des profondeurs de passe différentes, la passe antérieure étant achevée avant la correction de la valeur de consigne et le décalage de la valeur de consigne est entrepris pour au moins une des passes subséquentes de l'usinage de la pièce, dont notamment la dernière.

**10.** Procédé selon la revendication 9, dans lequel le déroulement dans le temps de l'adaptation des valeurs réelles aux valeurs de consigne, entreprise par la régulation non encore modifiée, est établi lors de ladite passe antérieure et est exploité comme données pour déterminer la correction de la valeur de consigne.

**11.** Procédé selon la revendication 10, dans lequel l'établissement de la correction de la valeur consigne a lieu à l'aide des écarts enregistrés concernant les positions angulaires de la broche de pièce et/ou de la broche d'outil et/ou à l'aide de couples établis effectivement appliqués par le moteur de la broche de pièce et/ou de la broche d'outil compte tenu de leur régulation de couple, en prenant notamment en considération la flexibilité de la pièce et de l'outil.

**12.** Procédé selon l'une des revendications précédentes, dans lequel la modification des valeurs de consigne est introduite dans la CN par le biais de valeurs de correction dressées sous forme de tableau.

**13.** Programme informatique comportant des instructions de programme qui, lorsqu'elles sont exécutées sur une machine à tailler les dentures, commandent la machine de façon qu'elle réalise un procédé selon l'une des revendications précédentes.

**14.** Machine à tailler les dentures comportant : une broche d'outil entraînée en rotation par un moteur d'entraînement de broche et servant à retenir un outil d'usinage, un moteur d'entraînement de broche servant à entraîner une broche de pièce à usiner, et une commande numérique (CN) des entraînements de broches rotatives, laquelle comprend une régulation de la position angulaire des broches à certaines valeurs de consigne déterminées en fonction des paramètres de processus saisis dans la machine, **caractérisée par** un organe de commande qui commande la machine de façon qu'elle réaliser un procédé selon l'une des revendications 1 à 12 et/ou un organe de commande doté d'un programme informatique selon la revendication 13.

Fig. 1a

Fig. 1b

Fig. 2

EP 3 341 802 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 2853331 A2